# EUROPEAN PATENT APPLICATION

(11) **EP 1 919 116 A2**
(43) Date of publication of application: **07.05.2008**
(21) Application number: 07021320.2
(22) Date of filing: 31.10.2007
(51) Int. Cl.: H04L 1/18

(54) **Method and apparatus for packet reception and transmission in a wireless communications system with automatic repeat request**

(30) Priority: 31.10.2006 US 855407 P
(71) Applicant: Innovative Sonic Limited, Tortola (VG)
(72) Inventor: Jiang, Sam Shiaw-Shiang, Peitou, Taipei City (TW)
(74) Representative: Weber, Joachim

(57) **Abstract**

A packet transmission method for a transmitter in a wireless communications system, for enhancing transmission efficiency when sporadic data transmission is needed, is disclosed. The packet transmission method includes initiating an HARQ procedure (502), triggering a transmission of a packet (504), and sending the packet repetitively until a predefined number ofACKs corresponding to the packet are received (506).

## Description

This application claims the benefit of U.S. Provisional Application No. 60/855,707, filed on Oct 31, 2006 and entitled "Method and apparatus of Adaptive Fast Hybrid ARQ", the contents of which are incorporated herein by reference.

The present invention relates to a method and apparatus for packet reception and transmission in a wireless communications system according to the pre-characterizing clauses of claims 1, 5, 9 and 15.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

In the prior art, HSDPA and HSUPA adopt Hybrid Automatic Repeat Request (HARQ) technology to enhance retransmission rate and reduce transmission delay. HARQ is a technology combining Feed-forward Error Correction (FEC) and ARQ methods, and uses a "Multi-channel Stop and Wait" algorithm, meaning that each channel decides to retransmit a packet or transmit the next packet according to positive/negative acknowledgement signals (ACK/NACK) reported by the receiver.

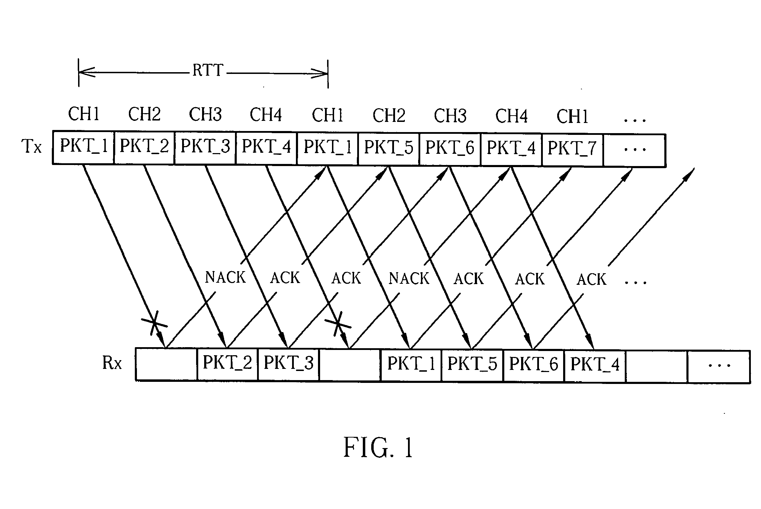

For example, please refer to Fig. 1, which illustrates a schematic diagram of the operation of the prior art HARQ procedure. In Fig. 1, a transmitter Tx sends packets PKT_1, PKT_2... to a receiver Rx through channels CH1, CH2, CH3, and CH4. After the packet PKT_1 is sent, the channel CH1 stops transmitting and waits for corresponding ACK/NACK. Meanwhile, other channels will sequentially send the packets PKT_2, PKT_3, and PKT_4, and wait for corresponding acknowledgement signals. In Fig. 1, the channel CH1 receives a NACK corresponding to the packet PKT_1 after a round trip time RTT, and the channel CH1 retransmits the packet PKT_1. Next, when the channel CH2 receives an ACK corresponding to the packet PKT_2, the channel CH2 transmits the next packet PKT_5. As a result, each channel can decide to retransmit a packet or transmit the next packet according to ACK/NACK reported by the receiver.

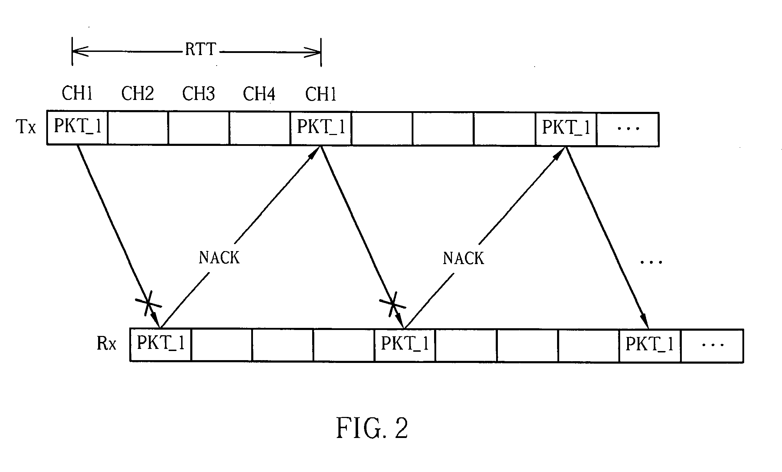

Therefore, the "Multi-channel Stop and Wait" algorithm can fully utilize the radio resources, to enhance transmission efficiency. However, for applications, such as shooting or gambling games, that transmit sporadic data but need extremely short transmission delay, the "Multi-channel Stop and Wait" scheme does not fully utilize the radio resources, and may affect fluency of the games. For example, in Fig. 2, there is no other packet except the packet PKT_1 to be sent to the receiver, where notations and corresponding meanings are the same as those in Fig. 1. As mentioned above, the "Multi-channel Stop and Wait" algorithm means that each channel decides to retransmit a packet or transmit the next packet according to corresponding acknowledgement signals reported by the receiver, so that the transmitter can retransmit a packet after a corresponding NACK is received. That is, each retransmission of the packet can only be triggered after an RTT. Take Fig. 2 for example, transmission of the packet PKT_1 fails twice, so that the transmission delay time is at least twice of RTT.

In order to improve the above-mentioned problem, a scheme of multiple transmissions has been introduced to improve transmission delay for AM (Acknowledgment Mode), which transmits a packet or a message for a predefined number of times without waiting for NACKs. The multiple-transmission scheme can also apply on HARQ. However, the drawback of the multiple-transmission scheme is that the predefined number of times does not ensure successful transmission of the packets if the predefined number of times is not properly configured.

In short, for applications that transmit sporadic data but need extremely short transmission delay, the prior art HARQ procedure does not fully utilize the radio resources.

This in mind, the present invention aims at providing a method and apparatus for packet reception and transmission in a wireless communications system, for fully utilizing the radio resources, so as to enhance transmission efficiency.

This is achieved by a method and apparatus for packet reception and transmission in a wireless communications system according to claims 1, 5, 9 and 15. The dependent claims pertain to corresponding further developments and improvements.

As will be seen more clearly from the detailed description following below, the claimed packet transmission method for a transmitter in a wireless communications system, for enhancing transmission efficiency when sporadic data transmission is needed, is disclosed. The packet transmission method comprises initiating an HARQ procedure, triggering a transmission of a packet, and sending the packet repetitively until a predefined number of ACKs corresponding to the packet are received.

In the following, the invention is further illustrated by way of example, taking reference to the accompanying drawings. Thereof
Fig. 1 and Fig. 2 are schematic diagrams of operations of the prior art HARQ procedure.
Fig. 3 is a function block diagram of a wireless communications device.
Fig. 4 is a diagram of program code of Fig. 3.
Fig. 5 is a flowchart of a process according to an embodiment of the present invention.
Fig. 6 is a schematic diagram of transmission of a packet according to the process shown in Fig. 5.
Fig. 7 is a flowchart of a process according to another embodiment of the present invention.

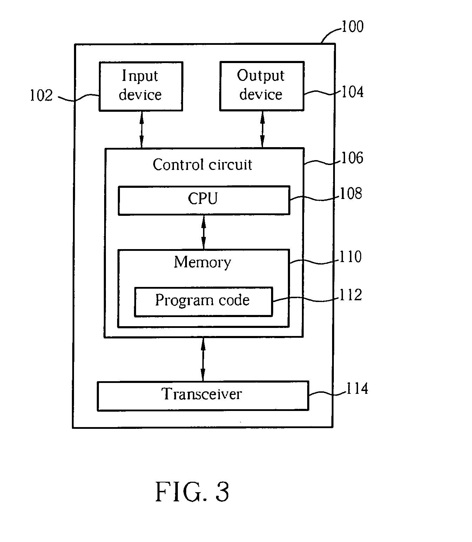

Please refer to Fig. 3, which is a functional block diagram of a communications device 100. For the sake of brevity, Fig. 3 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

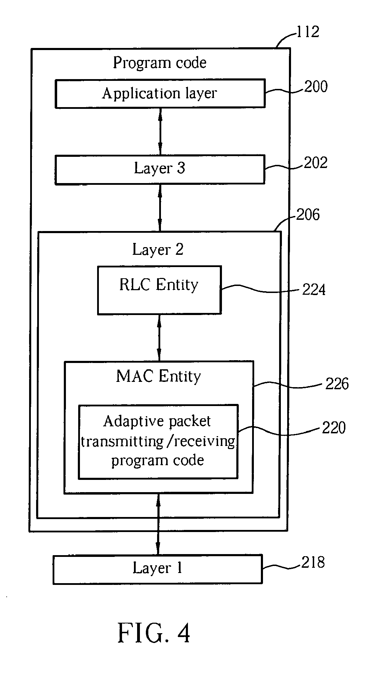

Please continue to refer to Fig. 4. Fig. 4 is a diagram of the program code 112 shown in Fig. 3. The program code 112 includes an application layer 200, a Layer 3 202, and a Layer 2 206, and is coupled to a Layer 1218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

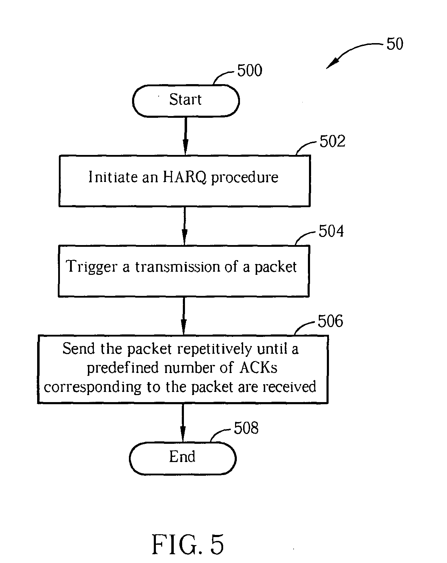

In some applications, such as when realizing HSDPA or HSUPA, the MAC entity 226 can execute an HARQ procedure, and retransmit packets based on acknowledgement signals outputted from a receiver. In such a situation, the embodiment of the present invention provides an adaptive packet transmitting/receiving program code 220 utilized for enhancing transmission efficiency when sporadic data transmission is needed, so as to reduce transmission delay in the HARQ procedure. Please refer to Fig. 5, which is a flowchart diagram of a process 50 according to the present invention. The process 50 is utilized in a transmitter of the wireless communication system for enhancing transmission efficiency when sporadic data transmission is needed, and can be compiled into the adaptive packet transmitting/receiving program code 220. The process 50 comprises the following steps:
Step 500: Start.
Step 502: Initiate an HARQ procedure.
Step 504: Trigger a transmission of a packet.
Step 506: Send the packet repetitively until a predefined number of ACKs corresponding to the packet are received.
Step 508: End.

According to the process 50, the embodiment of the present invention repetitively sends a packet until a predefined number of ACKs corresponding to the packet are received in the HARQ procedure. Preferably, the embodiment of the present invention repetitively sends the packet in every transmission time interval (TTI) until the predefined number of positive acknowledgment signals corresponding to the packet are received, and the predefined number can be any integer greater than or equal to 1.

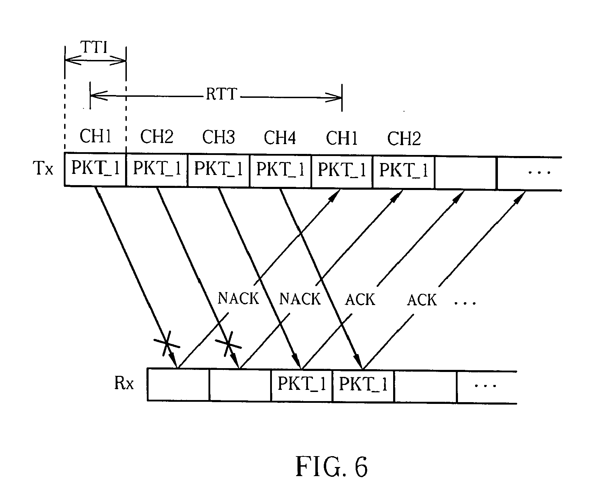

Therefore, via the process 50, the transmitter stops sending a packet when at least one ACK corresponding to the packet is received. As a result, for applications that transmit sporadic data but need extremely short transmission delay, the embodiment of the present invention can fully utilize the radio resources and enhance transmission efficiency. For example, please refer to Fig. 6, which illustrates a schematic diagram of transmission of a packet PKT_1 according to the process 50. For clarity, notations and corresponding meanings are the same as those in Fig. 1. As shown in Fig. 6, before an ACK corresponding to the packet PKT_1 is received, the embodiment of the present invention repetitively sends the packet PKT_1 in every TTI. Therefore, even if transmission of the packet PKT_1 fails twice (the transmitter Tx receives two ACKs), since the transmitter Tx repetitively sends the packet PKT_1 before receiving the corresponding ACK, the transmission delay time is twice of TTI (comparing to non-failure transmission) in the embodiment of the present invention. In comparison, in the prior art, the transmission delay time is at least twice of RTT. Therefore, the embodiment of the present invention can reduce transmission delay, especially for applications that transmit sporadic data but need extremely short transmission delay.

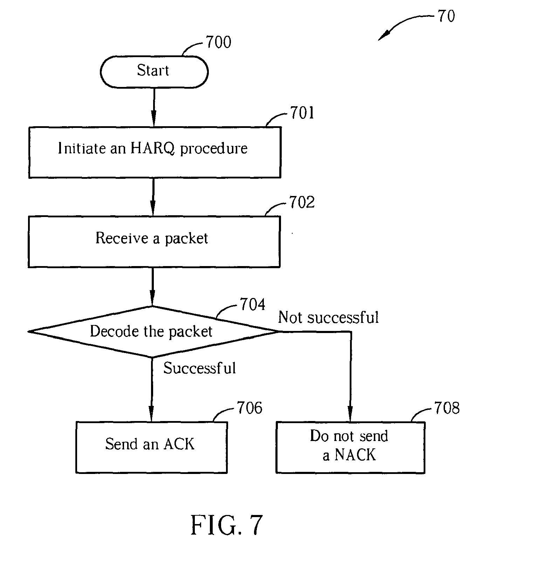

To cooperate with the process 50, please refer to Fig. 7, which is a flowchart diagram of a process 70 according to the present invention. The process 70 is utilized in a receiver of the wireless communication system for enhancing transmission efficiency when sporadic data transmission is needed, and can be compiled into the adaptive packet transmitting/receiving program code 220. The process 70 comprises the following steps:
Step 700: Start.
Step 701: Initiate an HARQ procedure.
Step 702: Receive a packet.
Step 704: Decode the packet. If the packet is successfully decoded, go to step 706; else, go to step 708.
Step 706: Send an ACK.
Step 708: Do not send a NACK.

According to the process 70, the embodiment of the present invention sends an ACK corresponding to a received packet only when the packet is successfully decoded. For example, when the packet is not successfully decoded, the embodiment of the present invention does not output a NACK corresponding to the packet. Preferably, the number of times the ACK corresponding to the packet has been sent is smaller than or equal to a predefined number, which can be any value greater than 1, such as 2, 3, or (RTT/TTI)-1. Consequently, after the number of the times the ACK corresponding to the packet has been sent is greater than the predefined number, the receiver does not respond any ACK for the same received packet, so as to save radio resources.

Through the processes 50 and 70, the transmitter repetitively sends a packet until a corresponding ACK reported by the receiver is received, while the receiver reports an ACK corresponding to a received packet only when the packet is successfully decoded and the number of times the ACK has been sent is smaller than or equal to the predefined number. In such a situation, even in a poor radio condition, especially in applications that transmit sporadic data but need extremely short transmission delay, the embodiment of the present invention can ensure efficient transmission, and reduce radio resource waste.

In summary, the embodiment of the present invention can fully utilize the radio resources, so as to enhance transmission efficiency, especially for applications that transmit sporadic data but need extremely short transmission delay.

## Claims

1. A packet transmission method for a transmitter in a wireless communications system, for enhancing transmission efficiency when sporadic data transmission is needed, the packet transmission method comprising:
initiating a hybrid automatic repeat request procedure (502); and
triggering a transmission of a packet (504);
**characterized by** sending the packet repetitively until a predefined number of positive acknowledgment signals corresponding to the packet are received (506).

2. The packet transmission method of claim 1, **characterized in that** sending the packet repetitively until the predefined number of positive acknowledgment signals corresponding to the packet are received (506) is repetitively sending the packet in every transmission time interval until the predefined number of positive acknowledgment signals corresponding to the packet are received.

3. The packet transmission method of claim 1, **characterized in that** the predefined number is 1.

4. The packet transmission method of claim 1, **characterized in that** the predefined number is greater than 1.

5. A communications device (100) of a wireless communications system utilized for enhancing transmission efficiency when sporadic data transmission is needed, the communications device comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
initiating a hybrid automatic repeat request procedure (502); and
triggering a transmission of a packet (504);
**characterized in that** the program code (112) further comprises sending the packet repetitively until a predefined number of positive acknowledgment signals corresponding to the packet are received.

6. The communications device of claim 5, **characterized in that** sending the packet repetitively until the predefined number of positive acknowledgment signals corresponding to the packet are received (506) is repetitively sending the packet in every transmission time interval until the predefined number of positive acknowledgment signals corresponding to the packet are received.

7. The communications device of claim 5, **characterized in that** the predefined number is 1.

8. The communications device of claim 5, **characterized in that** the predefined number is greater than 1.

9. A packet reception method for a receiver in a wireless communications system, for enhancing transmission efficiency when sporadic data transmission is needed, the packet reception method comprising:
initiating a hybrid automatic repeat request procedure (701);
receiving a packet (702); and
decoding the packet (704);
**characterized by** not sending a negative acknowledgment signal corresponding to the packet when the packet is not successfully decoded (708).

10. The packet reception method of claim 9 further comprising sending a positive acknowledgment signal corresponding to the packet when the packet is successfully decoded (706).

11. The packet reception method of claim 10, **characterized in that** sending the positive acknowledgment signal corresponding to the packet when the packet is successfully decoded (706) is sending the positive acknowledgment signal corresponding to the packet when the packet is successfully decoded and the number of times the positive acknowledgment signal has been sent is smaller than or equal to a predefined number.

12. The packet reception method of claim 11, **characterized in that** the predefined number is 2.

13. The packet reception method of claim 11, **characterized in that** the predefined number is 3.

14. The packet reception method of claim 11, **characterized in that** the predefined number is a result of subtracting 1 from a ratio of a round trip time to a transmission time interval.

15. A communications device (100) of a wireless communications system utilized for enhancing transmission efficiency when sporadic data transmission is needed, the communications device comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
initiating a hybrid automatic repeat request procedure (701);
receiving a packet (702); and
decoding the packet (704);
**characterized in that** the program code (112) further comprises not sending a negative acknowledgment signal corresponding to the packet when the packet is not successfully decoded (708).

16. The communications device of claim 15, **characterized in that** the program code further comprises sending a positive acknowledgment signal corresponding to the packet when the packet is successfully decoded (706).

17. The communications device of claim 16, **characterized in that** sending the positive acknowledgment signal corresponding to the packet when the packet is successfully decoded (706) is sending the positive acknowledgment signal corresponding to the packet when the packet is successfully decoded and the number of times the positive acknowledgment signal has been sent is smaller than or equal to a predefined number.

18. The communications device of claim 17, **characterized in that** the predefined number is 2.

19. The communications device of claim 17, **characterized in that** the predefined number is 3.

20. The communications device of claim 17, **characterized in that** the predefined number is a result of subtracting 1 from a ratio of a round trip time to a transmission time interval.
